(19) Europäisches Patentamt
European Patent Office
Office européen des brevets

(11) **EP 2 996 934 B1**

(12) **EUROPEAN PATENT SPECIFICATION**

(45) Date of publication and mention
of the grant of the patent:
**02.08.2017 Bulletin 2017/31**

(51) Int Cl.:
**B63C 9/03** *(2006.01)* **B63H 23/24** *(2006.01)*
**B63H 21/17** *(2006.01)* **H01M 2/10** *(2006.01)*

(21) Application number: **14724419.8**

(22) Date of filing: **14.05.2014**

(86) International application number:
**PCT/EP2014/059826**

(87) International publication number:
**WO 2014/184231 (20.11.2014 Gazette 2014/47)**

(54) **AN ELECTRICALLY POWERED PROPULSION SYSTEM FOR EMERGENCY VESSELS**

EINE ELEKTRISCHE ANTRIEBSSYSTEM FÜR EIN RETTUNGSBOOT

UN SYSTEME DE PROPULSION ELECTRIQUE POUR UNE EMBARCATION DE SAUVETAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.05.2013 US 201361822937 P**

(43) Date of publication of application:
**23.03.2016 Bulletin 2016/12**

(73) Proprietors:
• **Grønstøl, Leiv**
**5450 Sunde (NO)**
• **Syvertsen, Kåre**
**4658 Tveit (NO)**

(72) Inventors:
• **Grønstøl, Leiv**
**5450 Sunde (NO)**
• **Syvertsen, Kåre**
**4658 Tveit (NO)**

(74) Representative: **Onsagers AS**
**P.O. Box 1813 Vika**
**0123 Oslo (NO)**

(56) References cited:
**WO-A2-2012/104152 FR-A5- 2 225 965
JP-A- H09 272 479 JP-A- 2006 306 238**

**Description**

The present invention relates to an electrically powered emergency vessel for ships and other offshore facilities, comprising a closed hull, a propulsion assembly, an electric motor providing user controlled force to the propulsion assembly, a battery bank electrically connected to the motor and a generator electrically connected to the battery bank for charging of the battery bank.

The manufacturing of emergency vessels or lifeboats must take into account severe operating requirements in order to meet the security demands set by national and international authorities. As an example, under Norwegian jurisdiction any free fall lifeboats must contain propulsion engines that ensure a minimum of 24 working hours, having the possibility of repeated 360 degrees rotation and the ability to either keep running or show an immediate restart after successful launch. Furthermore, the propulsion engines must verify an ability of performing initial start within two minutes at temperatures down to -15°C.

For tankers and offshore vessels the requirements for lifeboats are stricter. Lifeboats associated with these kinds of ships must have a self-contained air support system adapted to transverse offshore fire areas during a minimum of 10 minutes without any significant penetration of hazardous gases, i.e. keeping any air valves closed. In addition, such lifeboats must contain fire guards to avoid that sparks ignite gases.

In addition, modern lifeboats of type free falling lifeboats must withstand G-forces during impact on water that exceeds 15 G.

Modern lifeboats satisfying most or all of the above mentioned criteria are powered by fossil fuel such as diesel. Alternative propulsion systems such as electrical motors have been proposed, but are still highly uncommon. An early example may be found disclosed in GB378127 where the lifeboat is provided with an electric motor operating a propeller shaft by means of storage batteries. A more recent example of an electrically operated lifeboat can be found disclosed in FR2225965. These kinds of lifeboats have had little or no commercial success. There are a numerous reasons for this:

- until recently there has been no battery technology available that has proven sufficiently robust for successful operations in harsh weather conditions,
- until recently electric motor technology has not been verified as sufficiently robust to meet today's requirements,
- until recently the battery and electric motor technology could not satisfy the need for manoeuvre and propulsion over a long period of time in a satisfactory way.

More than 40 years ago the dominant battery technology consisted of lead-acid batteries or lead-acid accumulators having high weight, low operating time (maximum 4-5 years) and high maintenance requirements. Furthermore, these batteries must be positioned with horizontal liquid level to avoid damage on their polarity plates. The above mentioned requirement of 24 working hours is hard to fulfil by use of only lead-acid batteries since their capacity is reduced from 100 % at 25 degrees to typically around 60 % at 0 degrees. To ensure having a 100 % charged lead-acid battery it is necessary to maintain a correct charge voltage, a requirement that is difficult to achieve since the charge voltage is highly temperature dependent. Also, these traditional battery types produce highly inflammable oxyhydrogen gas or battery gas during charge which needs to be guided out of the boat.

A prior art electric system of the old type had to be based on a direct current motor that necessitated use of humidity sensitive brushes and windings. Nowadays there are alternating current motors being adapted for maritime environments exhibiting the adequate robustness.

Modern lithium batteries are 100 % enclosed batteries which may be arranged in all directions. They are significantly smaller than lead-acid batteries and exhibit full capacity in the temperature range from -40 degrees to 20 degrees Centigrade. They may also provide a guaranteed operational time of around 20 years. These type of batteries have been applied as part of the propulsion system in various marine vessels as disclosed in for example WO2010/133540A1, WO2012/104152A2, US2011/0106348A1 and WO2012/119873A1. However, none of these publications disclose solutions that satisfy the above mentioned requirements for lifeboats.

The main object of the invention is therefore to provide an electrically operated lifeboat able to satisfy the modem requirements of lifeboats associated with large offshore installations such as oil platforms, tankers, passenger ships, cargo vessels and similar.

The above-identified objects are achieved by an apparatus and a method as defined in claim 1 and claim 15, respectively. Further beneficial features are defined in the dependent claims.

In particular, the present invention concerns an emergency vessel or lifeboats suitable for ships and other offshore facilities. The vessel comprises a closed hull, a propulsion assembly comprising a propulsion unit such as a propeller, at least one electric motor providing user controlled force to the propulsion assembly, at least one battery bank electrically connected to the electric motor and at least one generator electrically connected to the battery bank for charging of the battery bank(s). At least some of the one or more batteries within the battery bank(s) may be of type lithium-based batteries.

The inventive emergency vessel further comprises a damping system having a double-layered battery case which at least partly, preferably fully, encloses each, some or all of the at least one battery bank. The battery case comprises an inner layer stationary secured to the battery bank(s) and an outer layer stationary secured to the hull, and at least one damping means arranged between the battery bank(s) and the outer layer, for example between the battery bank(s) and the inner layer, or between the inner layer and the outer layer, or a combination of both.

The at least one damping system is configured to dampen water impact induced gravitational force acting on the battery bank(s) immediately after a free-fall drop of the emergency vessel to a gravitational (G) force below the lowest specified impact rating of the battery bank(s). A free fall drop may be a controlled free fall launch or an accidental drop from a davit or a controlled launch from a davit when exposed for extreme waves such as hundred-year waves. In addition, the damping system should ensure that the battery bank(s) remain stationary with respect to the hull during and after repeated 360 degrees rotations. The highest gravitational force normally occurs along the vessels direction of motion at the moment of impact.

The impact rating specified by the battery supplier may be 40 G or less. As a specific example, the impact rating of a battery of type AT6500 by Corvus Energy is specified to be 30 G. The peak G-force typically experienced at water impact after a free-fall launch from a ship is between 15 G and 40 G.

The space between the inner and outer layers should be larger than the maximum movements of the battery bank(s) expected to occur during water impact. For example, if a movement along the vessel's direction of motion is expected to be around 4 cm, the space between the inner and outer layers should be about 6-8 cm.

In a preferred embodiment at least one of the at least one damping means comprises at least one deformation means arranged between the inner layer and the outer layer. Each deformation means may cause a fully plastic deformation or an at least partly elastic deformation. The at least one damping means is preferably configured to allow movements of the battery bank(s) towards its/theirs initial position(s) after dampening said water impact induced gravitational force, hereinafter called the peak force. The velocity of the movement back towards the initial position, hereinafter called the return velocity, may preferably be less than 10 % of the opposite directed peak velocity, i.e. the velocity of the movement induced by the peak force. The return velocity is more preferably less than 5 %, even more preferably less than 1 %, for example 0.4-0.8 %.

In another preferred embodiment at least one of the damping means is arranged at one or both side walls of the at least partly enclosed battery case directed perpendicular to the vessel's direction of motion.

In another preferred embodiment at least one of the at least one damping means comprises a hydraulic cylinder. Furthermore, the damping system may comprise a hydraulic reservoir arranged in fluid communication with the hydraulic cylinder. At least one of the at least one hydraulic cylinder may be arranged at one or both side walls of the at least partly enclosed battery case directed perpendicular to the vessel's direction of motion.

In another preferred embodiment the damping system further comprises a valve, such as a throttle valve, configured to at least limit the flow between the hydraulic cylinder and the hydraulic reservoir.

In another preferred embodiment the electric motor(s) receives electrical current from the battery bank(s). It/they may also receive current / power from the generator(s), or from both the battery bank(s) and the generator(s).

In another preferred embodiment the source, level and time duration of the electrical current fed into the electrical motor(s) is, during use, controlled by a dedicated battery management system.

In another preferred embodiment the emergency vessel further comprises a load reducing means arranged at an upstream side of the propulsion assembly, i.e. between the propulsion unit and the electric motor in direction alongside the vessel, wherein the load reducing means is configured to at least reduce the water induced load on the propulsion assembly at water impact, while allowing normal water flow during regular propulsion. The load reducing means, which preferably is arranged within the vessel's hull, may comprise at least one water penetrating device arranged at one or both sides of the propulsion assembly, relative to the vessel's direction of motion. The water penetrating device may constitute a grid having a plurality of spaced bars, where a longitudinal component of each bar is directed along the vessel's direction of motion.

Normal water flow is herein defined as water flow which experiences little or no obstruction during penetration through the load reducing means.

In another preferred embodiment the emergency vessel further comprises a user controlled fire protection system electrically connected to the battery bank(s). The user controlled fire protection system may advantageously comprise an electrically controlled pump and a fluid distribution piping system, whereby the pump provides user controlled pressure and flow rate of fire extinguishing fluid to the fluid distribution piping system. Furthermore, the user controlled fire protection system may be of type electrically controlled fire sprinkler system.

In another preferred embodiment the emergency vessel further comprises a user controlled, self-contained gas support system providing breathable gas within the vessel for at least 10 minutes while all openings towards the exterior of the vessel are closed by dedicated valves. The pressure set by the self-contained gas support system during the period with closed valves is preferably never below the pressure outside the vessel and preferably never above 20 hPa. The self-contained gas support system may comprise pressure sensors capable of measuring the gas pressure within the vessel.

The present invention also concerns a method for operating an emergency vessel suitable for a ship or another offshore facility. The emergency vessel is in accordance with any of the above mentioned features disclosing the inventive vessel. The method comprises the following steps:

- charging and monitoring periodically or continuously the battery bank(s) using at least one exterior battery charger to ensure a predetermined charge on the battery bank(s), allowing at least 10 minutes with maximum power output to the electric motor(s),
- disconnecting the additional battery charger(s),
- starting the electric motor(s) by an electrically connected control unit,
- starting a battery management system for controlling the source, level and time duration of the electrical current fed into the electrical motor(s) and
- launching the emergency vessel from the offshore facility using a dedicated launching system.

The dedicated launching system may be a davit for controlled lowering of the vessel or any system allowing free fall launch.

The method may include the additional step of initiating a user controlled, self-contained gas support system providing breathable gas within the vessel for at least 10 minutes having all openings towards the exterior of the vessel closed by dedicated valves. Further, method may include the additional step of initiating a user controlled fire protection system electrically connected to the battery bank(s) of the propulsion system.

An alternative emergency vessel or lifeboats suitable for ships and other offshore facilities comprises a closed hull, a propulsion assembly comprising a propulsion unit such as an propeller, at least one electric motor providing user controlled force to the propulsion assembly, at least one battery bank electrically connected to the electric motor(s) and at least one generator electrically connected to the battery bank(s) for charging of the battery bank(s). At least some of the one or more batteries within the battery bank(s) may be of type lithium-based batteries. The inventive vessel further comprises a load reducing means arranged within the hull at an upstream side of the propulsion assembly, i.e. between the propulsion unit(s) and the electric motor(s) in direction alongside the vessel, wherein the load reducing means is configured to at least reduce the water induced load on the propulsion assembly at water impact, while allowing normal water flow during regular propulsion. The load reducing means may comprise at least one water penetrating device arranged at one or both sides of the propulsion assembly, relative to the vessel's direction of motion. The water penetrating device may constitute a grid having a plurality of spaced bars, where a longitudinal component of each bar is directed along the vessel's direction of motion. Any other features mentioned in connection with the first inventive vessel may be combined with this alternative emergency vessel.

The electric motor(s), the battery bank(s) and the generator(s) are configured to ensure continued operation of the propulsion system throughout its preestimated operational lifetime, even after repeated 360 degrees rotations, operational temperatures below -15 degrees Centigrade and exposures to G-forces up to 30 % higher then the G-forces typically experienced by the emergency vessel at water impact after a free-fall drop from installations such as large oil drilling platforms. The propulsion unit is preferably a propeller, a water-jet unit or a combination thereof. In case of a propeller the electric motor(s) is/are configured to exert a controllable torque on its/theirs propeller connected axle. The definition 'offshore facility' comprises any kind of objects submerged in a body of water and at least temporally habited by human being, for example oil platforms. The maximum G-forces are typically between 15G and 40G, more typically between 15G and 30G. The generator(s) may be fuelled by fossil fuel such as diesel or petrol. The propulsion system of the inventive vessel preferably guarantees an initial start or restart within 2 minutes at temperatures at least down to -15°C.

The battery bank(s) may be electrically connected to one or more exterior battery charger(s) positioned outside the vessel, for example on the facility linked to said vessel. Such battery bank(s) may comprise a main battery, an emergency battery and a start battery.

The propulsion system within the emergency vessel may further comprise at least one motor controller that is electrically connected to the electric motor(s). The motor controller(s) may for example regulate or limit the torque on the propeller connected axle and protect the propulsion system against overload and faults.

If the electric motor(s) is/are of type alternating current motor(s) the alternating current may be received either from the battery bank(s) via one or more DC-AC rectifiers, or from the generator(s), or from a combination thereof.

The battery bank(s) is/are preferably configured to provide at least 10 minutes with maximum power output to the electric motor(s). Further, the generator(s) should supply sufficient charge on the battery bank(s) to ensure a predetermined force on the propulsion unit during a predetermined period of time. The predetermined force may for example be the force necessary to ensure a constant vessel velocity in calm weather conditions of at least 6 knots (3.1 m/s). The predetermined period of time may for example be at least 24 hours.

In the following description, numerous specific details are introduced to provide a thorough understanding of embodiments of the claimed vessel and its components. One skilled in the relevant art, however, will recognize that these embodiments can be practiced without one or more of the specific details, or with other components, systems, etc. In other instances, well-known structures or operations are not shown, or are not described in detail, to avoid obscuring aspects of the disclosed embodiments.

Description of several preferential embodiments of the invention will be given as a non-restrictive example, with reference to the attached drawings, wherein:

Figure 1 shows a closed lifeboat in accordance with a first embodiment of the invention, submersed in a body of water,

Figures 2 (a) and (b) show a closed lifeboat in accordance with a second embodiment of the invention, during free fall,

Figure 3 shows a closed lifeboat in accordance with a third embodiment of the invention, during free fall,

Figure 4 shows a schematic diagram of an electric propulsion system within a closed lifeboat in accordance with the invention, delivering and controlling the power flow to an AC motor and a sprinkler system,

Figure 5 shows a battery assembly in accordance with a first embodiment of the invention, when arranged in a closed lifeboat,

Figure 6 shows a battery assembly in accordance with a second embodiment of the invention, when arranged in a closed lifeboat and

Figures 7 (a)-(c) show cross sections of the part of the lifeboat 1 containing the propulsion system which includes a rudder, a propeller, a propeller axle, an electric motor and a load reducing grid.

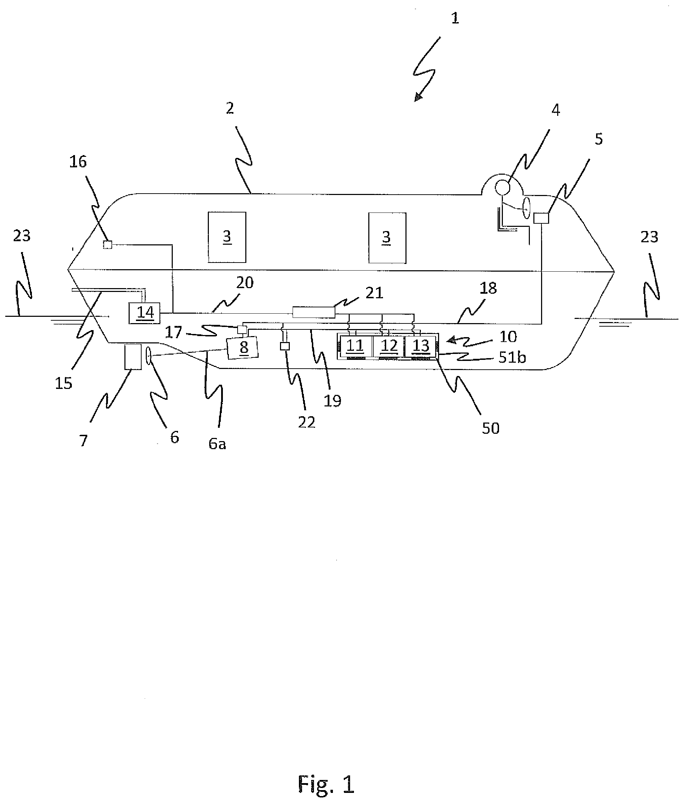

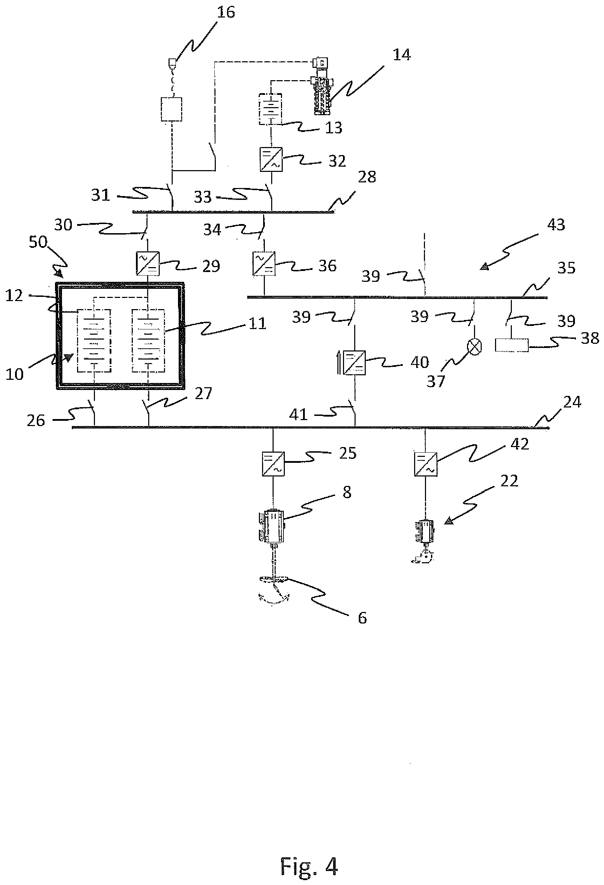

Figure 1 show in schematic form a user 4 operated lifeboat 1 with a closed hull 2 and one or more hatchways 3 being immersed in a body of water 23. An electric motor 8, preferably an AC motor, provides the desired torque to a propeller 6 via an axle 6a. The electric motor 8 may also be configured to provide the necessary force to a rudder 7. The electric current is transmitted from a battery bank 10 via electric motor cables 19 and a DC-to-AC inverter 25 (see figure 4), and/or transmitted directly from an AC generator 14, for example an AC diesel generator. A motor controller 17, which is electrically connected between the AC motor 8 and a user control panel 5 via a control cable 18, enables user control of the motor's 8 performance, for example start and stop, forward and reverse rotation, choice and control of velocity, control and limitation of torque, and overload protection and faults. The battery bank 10 is illustrated in figure 1 as comprising three batteries or battery systems, e.g.. main battery 11, emergency battery 12 and start battery 13. One or more batteries 13 may alternatively, or additionally, be electrically connected to the AC diesel generator 14, which generator 14 has an exhaust pipe 15 which extends to a position outside the hull 2. Also shown in figure 1 is a fire sprinkler system 22 that provides necessary cooling during a hydrocarbon fire. The control of power and performance of the system 22 is performed through the electric motor cables 19 and the control cables 18, respectively.

The battery bank 10 is charged via battery cables 20 and an AC-to-DC converter 29 (figure 4) by an exterior charger / power unit 16, or the AC diesel generator 14, or a combination thereof. The choice of energy source 14,16 is based on several parameters which include efficiency, cost and environmental considerations, and is performed by means of a dedicated propulsion control system 43 (figure 4).

When the lifeboat 1 is inactive, the battery bank 10 of the lifeboat 1 is charged by the exterior power unit 16 to ensure that the batteries or battery systems 11-13 have sufficient charge at all time during operation of lifeboat's 1 parent vessel or platform. This procedure may advantageously be automated, for example by checking the total charge at predetermined time intervals and recharging if total charge has dropped under a certain threshold. The threshold may for example be the amount of charge to the battery bank 10 that would allow 10 minutes of maximum power output to the electric motor 8. A similar automated procedure is envisaged for the diesel generator 14, for example to ensure sufficient fuel in fuel tank. When there is a need to launch the lifeboat 1 into the water 23 the following procedure may be implemented:

- the exterior power unit 16 is disconnected,
- subsequently, or simultaneously, the electric motor 8 is started by the user 4 via the control panel 5, the motor controller 17 and the control cables 18, profiting from the pre-charged battery bank 10,
- subsequently, or simultaneously, the control system 43, having a dedicated battery management system (BMS), is set in operation, hence allowing automated control of the source, level and time duration of the electrical current fed into the electrical motor 8 and, if needed, the fire sprinkler system 22,
- subsequently, or simultaneously, the lifeboat 1 is launched from the parent vessel and into the water 23 using a launching system (not shown),

- subsequently, or simultaneously, the lifeboat's 1 self-contained gas support system (not shown) may be activated by the user 4 via inter alia the control panel 5 if this is considered needed, for example during passage through a hydrocarbon fire on the water 23.

The launching system may be a davit for controlled lowering of the vessel 1 or any system which allows free fall launch. Furthermore, the support system should provide breathable gas within the vessel for at least 10 minutes having all openings towards the exterior of the vessel 1 closed by dedicated valves (not shown).

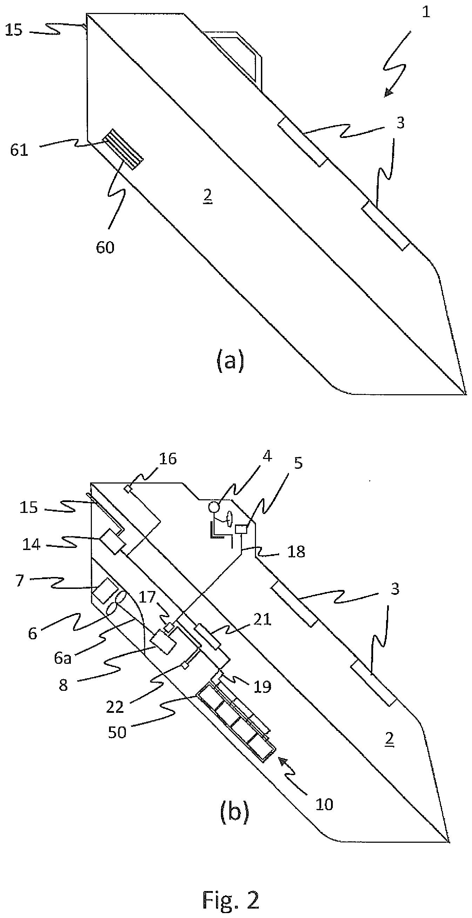

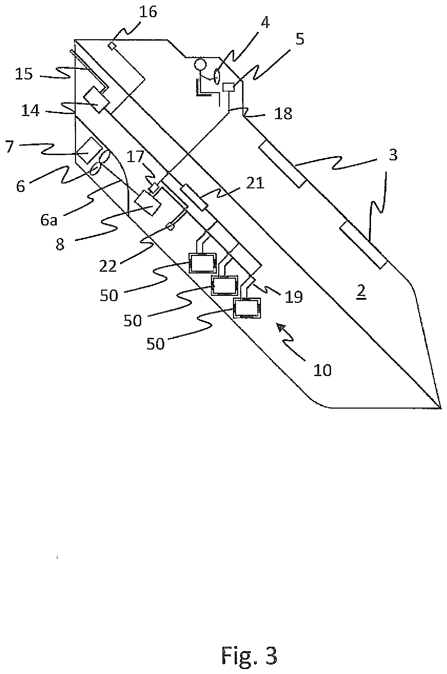

As mentioned previously, in order to withstand a free fall launch of the lifeboat 1 as illustrated in figures 2 and 3, or an accidental drop during launching from a davit, the propulsion system including the propulsion unit 6 and the battery bank 10 must be configured to endure high gravitational forces acting on the lifeboat 1 at impact on water 23. These G-forces depends on various parameters such as height of fall, impact angle, launching angle, etc. and will consequently vary significantly from case to case. The maximum G-force allowable is normally governed by the maximum allowable loads on the human body during impact. SOLAS (surface ocean lower atmosphere study) has specified a formula for calculating the maximum accelerations at a testing and an emergency situation:

$$1 \geq \sqrt{\left(\frac{gx}{Gx}\right)^2 + \left(\frac{gy}{Gy}\right)^2 + \left(\frac{gz}{Gz}\right)^2}$$

where gx, gy and gz are the concurrent accelerations in the x, y and z seat axes and Gx, Gy and Gz are allowable accelerations for specific launch conditions. In addition, the manufacturer must provide load tests corresponding to loads at height of falls exceeding 1.3 times the certified height of fall. These considerations must be taken into consideration during the design of the lifeboat 1.

Figure 2 (a) shows a free fall lifeboat 1 with a closed hull 2 and two hatchways 2. The lifeboat 1 has an alternative design as shown in figure 1 in which the user 4 is situated aft of the lifeboat 1. A grid 60 is arranged on both sides of the hull 2, upstream of the propulsion unit 6. At least some of the plurality of bars 61 constituting the grid 60 extends alongside the hull 2. Hence, when a large amount of water is flowing into the grid 60 during the short time period of water impact, the spaced bars 61 will cause the penetrating water to disperse, resulting in a significant load reduction on propulsion assembly, i.e. the rudder 7, the propulsion unit / propeller 6 and the axle 6a.

A cross sectional view of the lifeboat 1 is illustrated in figure 2 (b). As in figure 1 the inner components of the hull 2 comprises an electric motor 8, a propulsion unit 6 connected to the motor 8 via an axle 6a, a rudder 7 arranged downstream the propulsion unit 6 and a battery bank 10 transmitting electric power to the motor 8.

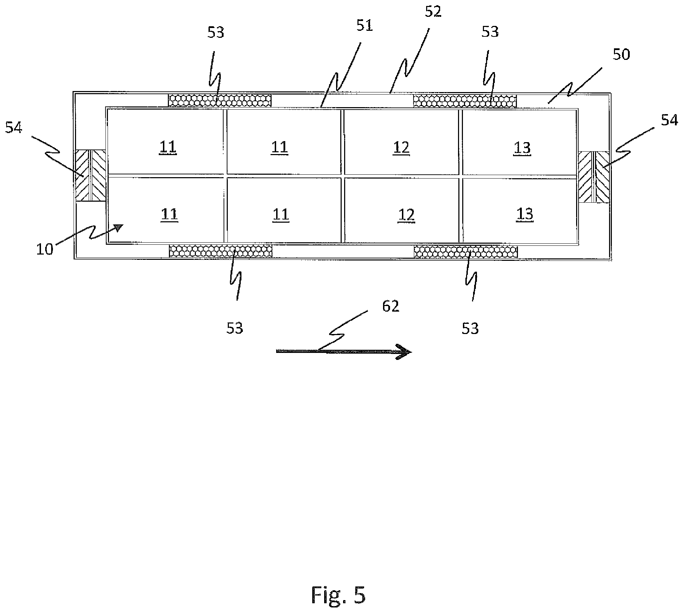

In order to dampen the significant gravitational (G) forces on the battery bank 10 at free fall impact, either by intentional free fall launch or by unintentional free fall drop from davit, the battery bank 10 has been equipped with an enclosure comprising a double-layered battery case 50. With reference to figure 5 the battery case 50 is shown to be composed of an inner case 51 completely enclosing the battery bank 10, and an outer case 52 completely enclosing the inner case 51. Within the space between the two cases 51,52 there are arranged a damping system ensuring damping of at least some of the side walls of the battery bank 10, preferably all. In the particular embodiment shown in figure 5 the damping system comprises a plurality of dampening spacers 53 arranged in contact with the sidewalls of the battery case 50 oriented parallel to the lifeboat's 1 direction of motion 62 (indicated in figure 5 by an arrow), and a at least partly elastic deformation device 54 arranged at the sidewalls oriented perpendicular to the direction of motion 62. Both the spacers 53 and the deformation devices 54 may consist of blocks made of materials with dampening properties such as various rubber or foam materials. The exact dimensions, numbers, positions of the damping system, and the distance between the inner and outer case 51,52 depend on the type and number of batteries constituting the innermost battery bank 10. Each battery is manufactured to withstand impact forces up to a specific threshold force, and the dampening system must be configured to dampen the gravitational forces acting on the free fall lifeboat 1 at water impact that is below this threshold. For example, a battery corresponding to the battery type Corvus AT 6500 has a supplier specified impact rating of 30 G. An impact force on the lifeboat 1 of for example 40 G would thus require a dampening of at least 10 G.

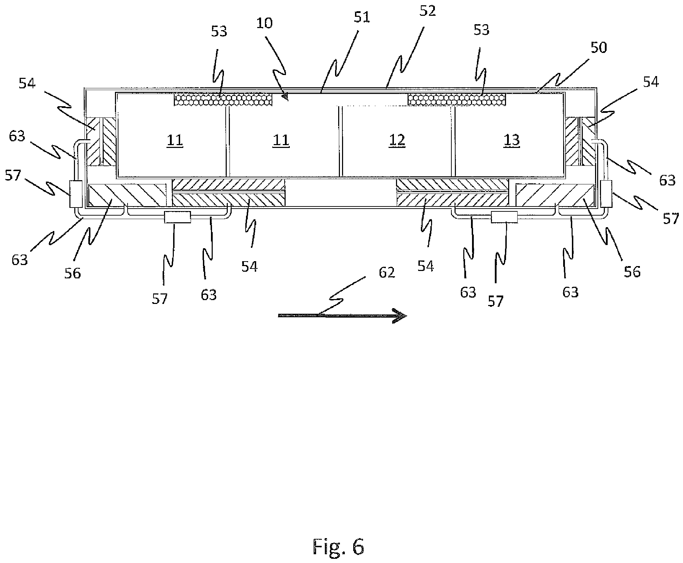

A second embodiment of the inventive battery assembly is shown in figure 6. In this embodiment the spacers 53 at the sidewalls of the case 50 parallel to the direction of motion 62 are arranged between the battery bank 10 and the inner case 51, while the deformation devices 54 are arranged between the inner and outer cases 51,52 at sidewalls situated both parallel and perpendicular to the direction of motion 62. As illustrated in figure 6 the deformation devices 54 may be hydraulic cylinders 54 fluidly connected via a system of tubes 63 and throttle valves 57 to hydraulic reservoirs 56. When the lifeboat 1 hits the water, a peak gravitational force is created. The duration of this peak force is short, typically between 1 and 100 milliseconds, for example 20 milliseconds. This peak force corresponds to a peak pressure on the hydraulic system 54,56,57,63 that is absorbed by inter alia the hydraulic cylinders 54 arranged on the sidewalls perpendicular to the direction of motion 62. The resulting peak velocity of the hydraulic cylinder movement is governed by the settings and properties of the throttle valves 57.

The cylinders 54 may be connected to a spring which forces the cylinders 54 towards the initial position when the peak pressure diminishes and the cylinders 54 suck the hydraulic fluid back from the hydraulic reservoirs 56. The return of the fluid to the cylinders 54 may be regulated by such a spring arrangement. However, the particular configurations of the throttle valves 57 provides an alternative or additional control of the fluid return, for example by regulating the return opening so that the return velocity of the cylinder 54, i.e. the opposite directed velocity formed after reaching the peak pressure, should be significantly slower than the peak velocity, thus avoided that the return velocity of the battery bank 10 after water impact creates an opposite directed acceleration which returns a large portion of the impact energy. The damping system therefore results in a desired absorption of impact energy.

A slow return of the battery bank 10 as described for the second embodiment of the battery arrangement may also be achieved by correct choice of deformation devices 54 mentioned in the first embodiment (figure 5).

Figure 3 shows an alternative embodiment of the battery system where each single battery 11-13 is enclosed with its respective battery case 50 (see figure 3). Each battery case 50 may be arranged in accordance with the configuration shown in figure 5 or figure 6, or a combination thereof.

An example of an electric power propulsion system specifically developed for lifeboats and combined lifeboats / tenders is illustrated in the schematic diagram of figure 4. The propulsion system comprises the following main components:

- an alternating current motor (AC motor) 8 for operation of propellers 6 or other kind of propulsion units,
- a 650 V DC bus 24,
- a 650 V DC-to-AC inverter 25 connected at one side to the AC motor 8 and on the other side to the 650 V DC bus 24,
- a battery bank 10 comprising

  ∘ one or more lithium ion main batteries 11 and
  ∘ one or more parallel connected lithium ion emergency batteries 12,

  where the main batteries 11 and the emergency batteries 12 are at one side connected to the 650 V DC bus 24 via first and second 650 V power switches 26,27, respectively,
- a 230 V AC bus 28,
- a 230 V AC-to-DC battery charger 29 connected at one side to the battery bank 10 opposite to the side of the 650 V DC bus 24 and on the other side to the 230 V AC bus 28 via a first 230 V power switch 30,
- a supply unit 16 for supply of charge current from parent vessel connected to the 230 V AC bus 28 via a second 230 V power switch 30,
- a 12 kW diesel DC generator 14 for alternative or additional charging of battery bank 10, or supply of energy to battery bank 10 in order to secure a minimum of 24 hours operation,
- a 230 V DC-to-AC inverter and/or charger 32 connected on one side at least indirectly to the diesel DC generator 14 and on the other side to the 230V AC bus 28 via a third 230 V power switch 33,
- a 24 V DC bus 35,
- a 230 V AC to 24 V DC transformer/converter 36 connected at one side to the 230 V AC bus 28 via a fourth 230 V power switch 34 and the other side to the 24 V DC bus 35,
- lamp(s) 37 and other instruments 38 connected to the 24 V DC bus 35 via appropriate 24V switches 39,
- a 650 V DC to 24 V DC transformer/converter 40 connected between the 650 V bus 24 and the 24 V DC bus 35 via appropriate 24 V switch 39 on the 24 V DC bus side and a third 650 V power switch 41 on the 650 V DC bus side,
- AC motor 22a for operation of a sprinkler system 22 intended to cool down an hydrocarbon fire, and
- an additional 650 V DC-to-AC converter 42 connected at one side to the 650 V DC bus 24 and on the other side to the AC motor 22a.

The switch diagram also shows a start battery 13 connected between the DC-to-AC converter/charger 32 and the diesel generator 14 for ensuring a more secure start. The diesel tank of the generator 14 is not shown for the sake of simplicity.

The components being electrically connected to the 24 V DC bus 35 constitutes a control system 43 powered from one or more of the battery bank 10, the supply unit 16 and the diesel generator 14. The control system 43 is designed specifically to operate lifeboats in different phases throughout an emergency such as an evacuation. By the control system 43 one may alternate between the power unit 16, the battery bank 10 or diesel generator 14 or combinations thereof. In addition, the control system 43 may activate any sprinkler pump 22 when needed. The control system 43 is further designed to optimize the energy consumption in the most effective way by inter alia activating and receiving control signal from a known system called Battery Management System (BMS).

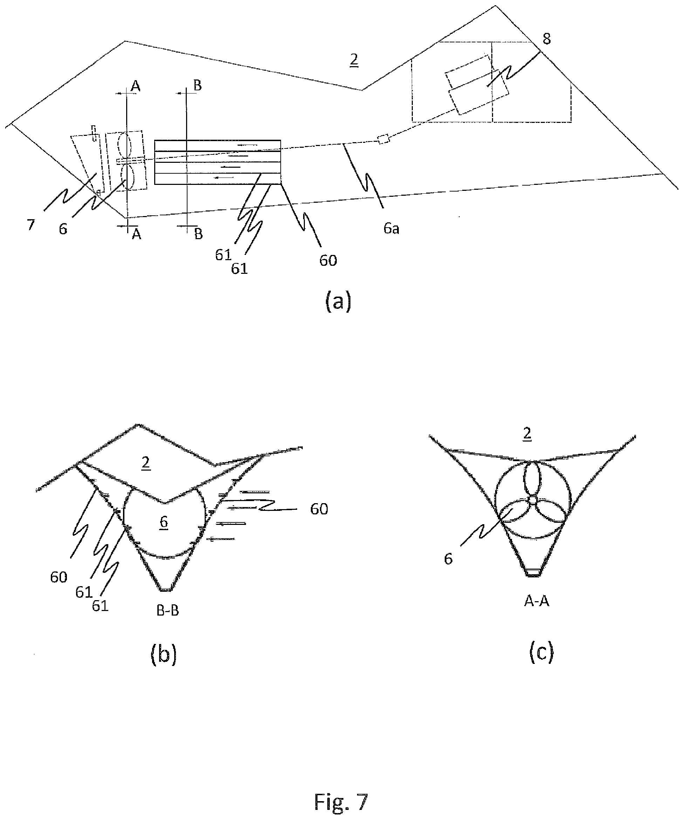

Figures 7 (a) to (c) show a section of the lifeboat 1 providing further details of the grid 60 and the propulsion system 6-8. The arrows between the bars 61 of the grid 60 indicate the direction of the water, both during free fall impact and during forward thrust.

In the preceding description, various aspects of the vessel and the method according to the invention have been described with reference to the illustrative embodiment. For purposes of explanation, specific numbers, systems and configurations were set forth in order to provide a thorough understanding of the apparatus and its workings. However, this description is not intended to be construed in a limiting sense. Various modifications and variations of the illustrative embodiment, as well as other embodiments of the vessel, which are apparent to persons skilled in the art to which the disclosed subject matter pertains, are deemed to lie within the scope of the present invention.

<div align="center">

**Reference numerals:**

</div>

| | |
|---|---|
| Emergency vessel / lifeboat | 1 |
| Closed hull | 2 |
| Hatchway | 3 |
| User | 4 |
| User control panel | 5 |
| Propulsion unit | 6 |
| Axle | 6a |
| Rudder | 7 |
| Electric motor / AC motor | 8 |
| Battery bank | 10 |
| Main battery | 11 |
| Emergency battery | 12 |
| Start battery | 13 |
| Generator / diesel generator / 12 kW diesel DC generator | 14 |
| Exhaust pipe | 15 |
| Exterior battery charger / exterior charger / power unit / supply unit | 16 |
| Motor controller / control unit | 17 |
| Control cable | 18 |
| Cable for current to electric motor / electric motor cable | 19 |
| Cable for battery charge / battery cable | 20 |
| Control box for battery charging | 21 |
| User controlled fire protection system / fire sprinkler system | 22 |
| Body of water | 23 |
| 650 V DC bus | 24 |
| First 650 V DC to AC inverter | 25 |
| First 650 V power switch | 26 |
| Second 650 V power switch | 27 |
| 230 V AC bus | 28 |
| 230 V AC to DC battery charger / converter | 29 |
| First 230 V power switch | 30 |
| Second 230 V power switch | 31 |
| 230 V DC to AC inverter / charger | 32 |
| Third 230 V power switch | 33 |
| Fourth 230 V power switch | 34 |
| 24 V DC bus | 35 |
| 230 V to 24 V DC transformer/converter | 36 |
| Lamp | 37 |
| Instruments | 38 |
| 24V switches | 39 |
| 650 V DC to 24 V DC transformer/converter | 40 |
| Third 650 V power switch | 41 |

(continued)

| | |
|---|---|
| Second 650 V DC to 220 V AC transformer/inverter | 42 |
| Propulsion control system | 43 |
| Double-shell battery case | 50 |
| Inner shell (of battery case) | 51 |
| Side walls (of inner shell) crossing vessel's direction of motion | 51a,b |
| Outer shell (of battery case | 52 |
| Damping means / spacers | 53 |
| Deformation means | 54 |
| Hydraulic cylinder | 55 |
| Hydraulic reservoir | 56 |
| Valve / throttle valve | 57 |
| Load reducing means / water penetrating device / grid | 60 |
| Bars (within grid) | 61 |
| Direction of motion | 62 |

**Claims**

1. Emergency vessel (1) for ships and other offshore facilities comprising:

   - a closed hull (2),
   - a propulsion assembly (6,6a,7) comprising a propulsion unit (6),
   - an electric motor (8) providing user controlled force to the propulsion assembly (6,6a,7),
   - a battery bank (10) electrically connected to the electric motor (8) and
   - a generator (14) electrically connected to the battery bank (10) for charging of the battery bank (10),

   **characterized in that** the emergency vessel (1) further comprises

   - a damping system (50-57) comprising

      - a double-layered battery case (50) at least partly enclosing the battery bank (10), the battery case (50) having an inner layer (51) stationary secured to the battery bank (10) and an outer layer (52) stationary secured to the hull (2) and
      - at least one damping means (53) arranged between the battery bank (10) and the outer layer (52),

   wherein the at least one damping system (50-57) is configured to dampen water impact induced gravitational force acting on the battery bank (10) immediately after a free-fall drop of the emergency vessel (1) to a gravitational force below the lowest specified impact rating of the battery bank (10) and to remain stationary with respect to the hull (2) during repeated 360 degrees rotations.

2. Emergency vessel (1) in accordance with claim 1, **characterized in that** at least one of the at least one damping means (53) comprises at least one deformation means (54) arranged between the inner layer (51) and the outer layer (52).

3. Emergency vessel (1) in accordance with claim 1 or 2, **characterized in that** the at least one damping means (53) are configured to move the battery bank (10) towards its initial position after dampening said water impact induced gravitational force, wherein the velocity of the movement towards the initial position is less than 10 % of the opposite directed velocity of the movement induced by the water impact.

4. Emergency vessel (1) in accordance with any one of the preceding claims, **characterized in that** at least one of the damping means (53) is arranged at a side wall (51a,51b) of the at least partly enclosed battery case (50) directed perpendicular to the vessel's (1) direction of motion (62).

5. Electrically powered propulsion system in accordance with any one of the preceding claims, **characterized in that** at least one of the at least one damping means (53) comprises a hydraulic cylinder (55) and that the damping system (50-57) further comprises a hydraulic reservoir (56) arranged in fluid communication with the hydraulic cylinder (55).

6. Emergency vessel (1) in accordance with claim 5, **characterized in that** at least one of the at least one hydraulic cylinder (55) is arranged at a side wall (51a,51b) of the at least partly enclosed battery case (50) directed perpendicular to the vessel's (1) direction of motion (62)

7. Emergency vessel (1) in accordance with claim 6, **characterized in that** the damping system (50-57) further comprises
a valve (57) configured to at least limit the flow between the hydraulic cylinder (55) and the hydraulic reservoir (56).

8. Emergency vessel (1) in accordance with any one of the preceding claims, **characterized in that** the electric motor (8) receives electrical current either from the battery bank (10) or from the generator (14) or from a combination thereof.

9. Emergency vessel (1) in accordance with any one of the preceding claims, **characterized in that** the source, level and time duration of the electrical current fed into the electrical motor (8) is, during use, controlled by a dedicated battery management system.

10. Emergency vessel (1) in accordance with any one of the preceding claims, **characterized in that** the emergency vessel (1) further comprises
a load reducing means (60) arranged within the hull (2) at an upstream side of the propulsion assembly (6,6a,7), wherein the load reducing means (60) is configured to at least reduce the water induced load on the propulsion assembly (6,7) at water impact, while allowing normal water flow during regular propulsion.

11. Emergency vessel (1) in accordance with claim 10, **characterized in that** the load reducing means (60) comprises at least one water penetrating device arranged at one or both sides of the propulsion assembly (6,6a) relative to the vessel's (1) direction of motion (62).

12. Emergency vessel (1) in accordance with claim 11, **characterized in that** the water penetrating device (60) constitutes a grid having a plurality of spaced bars (61), where a longitudinal component of each bar (61) is directed along the vessel's (1) direction of motion (62).

13. Emergency vessel in accordance with any one of the preceding claims, **characterized in that** the emergency vessel (1) further comprises a user controlled fire protection system (22) electrically connected to the battery bank (10).

14. Emergency vessel in accordance with any one of the preceding claims, **characterized in that** the emergency vessel (1) further comprises a user controlled, self-contained gas support system providing breathable gas within the vessel (1) for at least 10 minutes while all openings towards the exterior of the vessel (1) are closed by dedicated valves.

15. Method for operating an emergency vessel (1) for a ship or another offshore facility, the emergency vessel (1) being in accordance with any one of claims 1-14, wherein the method comprises the following steps:

- charging and monitoring periodically or continuously the battery bank (10) using an exterior battery charger (16) to ensure a predetermined charge on the battery bank (10), allowing at least 10 minutes with maximum power output to the electric motor (8),
- disconnecting the additional battery charger (16),
- starting the electric motor (8) by an electrically connected control unit (17),
- starting a battery management system for controlling the source, level and time duration of the electrical current fed into the electrical motor (8) and
- launching the emergency vessel (1) from the offshore facility using a dedicated launching system.

**Patentansprüche**

1. Rettungsboot (1) für Schiffe und sonstige Offshore-Einrichtungen, das Folgendes umfasst:

- einen geschlossenen Rumpf (2),
- eine Antriebsanordnung (6, 6a, 7), die eine Antriebseinheit (6) umfasst,
- einen Elektromotor (8), der der Antriebsanordnung (6, 6a, 7) eine benutzergesteuerte Kraft bereitstellt,

- eine elektrisch mit dem Elektromotor (8) verbundene Batteriebank (10) und
- einen elektrisch mit der Batteriebank (10) zum Aufladen der Batteriebank (10) verbundenen Generator (14),

**dadurch gekennzeichnet, dass** das Rettungsboot (1) ferner Folgendes umfasst:

- ein Dämpfungssystem (50-57), das Folgendes umfasst:

- ein doppelschichtiges Batteriegehäuse (50), das die Batteriebank (10) zumindest teilweise umschließt, wobei das Batteriegehäuse (50) eine innere Schicht (51), die fest an dem Batteriegehäuse (10) befestigt ist, und eine äußere Schicht (52) aufweist, die fest an dem Rumpf (2) befestigt ist, und
- mindestens eine Dämpfungseinrichtung (53), die zwischen der Batteriebank (10) und der äußeren Schicht (52) angebracht ist,

wobei das mindestens eine Dämpfungssystem (50-57) dazu konfiguriert ist, die durch den Wasseraufprall hervorgerufene Schwerkraft, die unmittelbar nach einem Abwurf des Rettungsboots (1) in freiem Fall auf die Batteriebank (10) einwirkt, auf eine Schwerkraft unter dem geringsten angegebenen Aufprallwert der Batteriebank (10) zu dämpfen und in Bezug auf den Rumpf (2) während wiederholter Drehungen um 360 Grad fest zu bleiben.

2. Rettungsboot (1) nach Anspruch 1, **dadurch gekennzeichnet, dass** mindestens eine der mindestens einen Dämpfungseinrichtung (53) mindestens eine Verformungseinrichtung (54) umfasst, die zwischen der inneren Schicht (51) und der äußeren Schicht (52) angeordnet ist.

3. Rettungsboot (1) nach Anspruch 1 oder 2, **dadurch gekennzeichnet, dass** die mindestens eine Dämpfungseinrichtung (53) dazu konfiguriert ist, die Batteriebank (10) nach dem Dämpfen der durch den Wasseraufprall hervorgerufenen Schwerkraft in ihre Ausgangsposition zu bewegen, wobei die Geschwindigkeit der Bewegung in die Ausgangsposition weniger als 10 % der entgegengesetzt gerichteten Geschwindigkeit der durch den Wasseraufprall hervorgerufenen Bewegung beträgt.

4. Rettungsboot (1) nach einem der vorstehenden Ansprüche, **dadurch gekennzeichnet, dass** die mindestens eine Dämpfungseinrichtung (53) an einer Seitenwand (51a, 51b) des zumindest teilweise umschlossenen Batteriegehäuses (50) angeordnet ist, die senkrecht zu der Bewegungsrichtung (62) des Boots (1) ausgerichtet ist.

5. Elektrisch betriebenes Antriebssystem nach einem der vorstehenden Ansprüche, **dadurch gekennzeichnet, dass** mindestens eine der mindestens einen Dämpfungseinrichtung (53) einen Hydraulikzylinder (55) umfasst und dass das Dämpfungssystem (50-57) ferner einen Hydraulikbehälter (56) umfasst, der in Fluidverbindung mit dem Hydraulikzylinder (55) angeordnet ist.

6. Rettungsboot (1) nach Anspruch 5, **dadurch gekennzeichnet, dass** mindestens einer des mindestens einen Hydraulikzylinders (55) an einer Seitenwand (51a, 51b) des zumindest teilweise umschlossenen Batteriegehäuses (50) angeordnet ist, die senkrecht zu der Bewegungsrichtung (62) des Boots (1) ausgerichtet ist.

7. Rettungsboot (1) nach Anspruch 6, **dadurch gekennzeichnet, dass** das Dämpfungssystem (50-57) ferner Folgendes umfasst:

ein Ventil (57), das dazu konfiguriert ist, den Strom zwischen dem Hydraulikzylinder (55) und dem Hydraulikbehälter (56) zumindest einzuschränken.

8. Rettungsboot (1) nach einem der vorstehenden Ansprüche, **dadurch gekennzeichnet, dass** der Elektromotor (8) elektrischen Strom entweder von der Batteriebank (10) oder von dem Generator (14) oder von einer Kombination daraus aufnimmt.

9. Rettungsboot (1) nach einem der vorstehenden Ansprüche, **dadurch gekennzeichnet, dass** die Quelle, die Menge und die Dauer der Zufuhr des dem Elektromotor (8) zugeführten elektrischen Stroms während der Verwendung von einem dafür vorgesehenen Batterieverwaltungssystem geregelt werden.

10. Rettungsboot (1) nach einem der vorstehenden Ansprüche, **dadurch gekennzeichnet, dass** das Rettungsboot (1) ferner Folgendes umfasst:

eine Lastverringerungseinrichtung (60), die im Rumpf (2) an einer der Antriebsanordnung (6, 6a, 7) vorgelagerten Seite angeordnet ist,

wobei die Lastverringerungseinrichtung (60) dazu konfiguriert ist, bei Wasseraufprall die durch das Wasser auf die Antriebsanordnung (6, 7) hervorgerufene Last zumindest zu verringern, während sie bei regulärem Antrieb einen normalen Wasserstrom zulässt.

11. Rettungsboot (1) nach Anspruch 10, **dadurch gekennzeichnet, dass** die Lastverringerungseinrichtung (60) mindestens eine Wassereindringvorrichtung aufweist, die an einer oder beiden Seiten der Antriebsanordnung (6, 6a) relativ zur Bewegungsrichtung (62) des Boots (1) angeordnet ist.

12. Rettungsboot (1) nach Anspruch 11, **dadurch gekennzeichnet, dass** die Wassereindringvorrichtung (60) ein Gitter umfasst, das eine Vielzahl beabstandeter Stangen (61) aufweist, wobei eine längslaufende Komponente jeder Stange (61) entlang der Bewegungsrichtung (62) des Boots (1) ausgerichtet ist.

13. Rettungsboot nach einem der vorstehenden Ansprüche, **dadurch gekennzeichnet, dass** das Rettungsboot (1) ferner ein benutzergesteuertes Brandschutzsystem (22) aufweist, das elektrisch mit der Batteriebank (10) verbunden ist.

14. Rettungsboot nach einem der vorstehenden Ansprüche, **dadurch gekennzeichnet, dass** das Rettungsboot (1) ferner ein benutzergesteuertes, in sich geschlossenes Gaszufuhrsystem umfasst, das atembares Gas in dem Boot (1) über mindestens 10 Minuten hinweg bereitstellt, während alle Öffnungen zum Äußeren des Boots (1) durch dafür vorgesehene Ventile geschlossen sind.

15. Verfahren zum Betreiben eines Rettungsboots (1) für ein Schiff oder eine sonstige Offshore-Einrichtung, wobei das Rettungsboot (1) einem der Ansprüche 1-14 entspricht, wobei das Verfahren die folgenden Schritte umfasst:

- regelmäßiges oder dauerhaftes Aufladen und Kontrollieren der Batteriebank (10) unter Verwendung einer externen Batterieaufladeeinrichtung (16), um eine vorab festgelegte Aufladung der Batteriebank (10) zu gewährleisten, die mindestens 10 Minuten maximaler Leistungsabgabe an den Elektromotor (8) ermöglicht,
- Trennen der zusätzlichen Batterieaufladeeinrichtung (16),
- Anlassen des Elektromotors (8) durch eine elektrisch angeschlossene Steuereinheit (17),
- Starten eines Batterieverwaltungssystems zum Steuern der Quelle, der Menge und der Dauer des dem Elektromotor (8) zugeführten elektrischen Stroms und
- Ablassen des Rettungsboots (1) aus der Offshore-Einrichtung unter Verwendung eines dafür vorgesehenen Ablasssystems.

## Revendications

1. Embarcation de sauvetage (1) pour des bateaux et d'autres installations en mer comprenant :

- une coque fermée (2),
- un ensemble de propulsion (6, 6a, 7) comprenant une unité de propulsion (6),
- un moteur électrique (8) fournissant une force commandée par un utilisateur à l'ensemble de propulsion (6, 6a, 7),
- un banc de batteries (10) connecté électriquement au moteur électrique (8) et
- un générateur (14) connecté électriquement au banc de batteries (10) pour charger le banc de batteries (10),

**caractérisé en ce que** l'embarcation de sauvetage (1) comprend en outre

- un système d'amortissement (50 à 57) comprenant

- un boîtier de batterie double couche (50) renfermant au moins en partie le banc de batteries (10), le boîtier de batterie (50) ayant une couche interne (51) stationnaire arrimée au banc de batteries (10) et une couche externe (52) stationnaire arrimée à la coque (2) et
- au moins un moyen d'amortissement (53) agencé entre le banc de batteries (10) et la couche externe (52),

dans lequel l'au moins un système d'amortissement (50 à 57) est configuré pour amortir une force gravitationnelle induite par impact d'eau agissant sur le banc de batteries (10) immédiatement après une descente en chute libre de l'embarcation de sauvetage (1) à une force gravitationnelle en dessous du taux d'impacts spécifié le plus bas du banc de batteries (10) et pour rester stationnaire par rapport à la coque (2) pendant des rotations répétées de 360 degrés.

2. Embarcation de sauvetage (1) selon la revendication 1, **caractérisé en ce qu'**au moins l'un des au moins un moyen d'amortissement (53) comprend au moins un moyen de déformation (54) agencé entre la couche interne (51) et la couche externe (52).

3. Embarcation de sauvetage (1) selon la revendication 1 ou 2, **caractérisé en ce que** les au moins un moyen d'amortissement (53) sont configurés pour déplacer le banc de batteries (10) vers sa position initiale après amortissement de ladite force gravitationnelle induite par impact d'eau, dans lequel la vitesse du déplacement vers la position initiale est inférieure à 10 % de la vitesse dirigée opposée du déplacement induit par l'impact d'eau.

4. Embarcation de sauvetage (1) selon l'une quelconque des revendications précédentes, **caractérisé en ce qu'**au moins l'un des moyens d'amortissement (53) est agencé au niveau d'une paroi latérale (51a, 51b) du boîtier de batterie au moins en partie renfermé (50) dirigé perpendiculaire à la direction de mouvement (62) de l'embarcation (1).

5. Système de propulsion à alimentation électrique selon l'une quelconque des revendications précédentes, **caractérisé en ce qu'**au moins l'un des au moins un moyen d'amortissement (53) comprend un vérin hydraulique (55) et **en ce que** le système d'amortissement (50 à 57) comprend en outre un réservoir hydraulique (56) agencé en communication fluidique avec le vérin hydraulique (55).

6. Embarcation de sauvetage (1) selon la revendication 5, **caractérisé en ce qu'**au moins l'un de l'au moins un vérin hydraulique (55) est agencé au niveau d'une paroi latérale (51a, 51b) du boîtier de batterie au moins en partie renfermé (50) dirigé perpendiculaire à la direction de mouvement (62) de l'embarcation (1).

7. Embarcation de sauvetage (1) selon la revendication 6, **caractérisé en ce que** le système d'amortissement (50 à 57) comprend en outre
une vanne (57) configurée pour au moins limiter l'écoulement entre le vérin hydraulique (55) et le réservoir hydraulique (56).

8. Embarcation de sauvetage (1) selon l'une quelconque des revendications précédentes, **caractérisé en ce que** le moteur électrique (8) reçoit un courant électrique soit en provenance du banc de batteries (10) soit en provenance du générateur (14) soit en provenance d'une combinaison de ceux-ci.

9. Embarcation de sauvetage (1) selon l'une quelconque des revendications précédentes, **caractérisé en ce que** la source, le niveau et la durée du courant électrique fourni dans le moteur électrique (8) sont, pendant l'utilisation, commandés par un système de gestion de batterie dédié.

10. Embarcation de sauvetage (1) selon l'une quelconque des revendications précédentes, **caractérisé en ce que** l'embarcation de sauvetage (1) comprend en outre
un moyen de réduction de charge (60) agencé au sein de la coque (2) au niveau d'un côté amont de l'ensemble de propulsion (6, 6a, 7),
dans lequel le moyen de réduction de charge (60) est configuré pour au moins réduire la charge induite par l'eau sur l'ensemble de propulsion (6, 7) lors d'un impact d'eau, tout en permettant un écoulement d'eau normal pendant une propulsion habituelle.

11. Embarcation de sauvetage (1) selon la revendication 10, **caractérisé en ce que** le moyen de réduction de charge (60) comprend au moins un dispositif de pénétration dans l'eau agencé au niveau d'un ou des deux côtés de l'ensemble de propulsion (6, 6a) par rapport à la direction de mouvement (62) de l'embarcation (1).

12. Embarcation de sauvetage (1) selon la revendication 11, **caractérisé en ce que** le dispositif de pénétration dans l'eau (60) constitue une grille ayant une pluralité de barres espacées (61), où un composant longitudinal de chaque barre (61) est dirigé le long de la direction de mouvement (62) de l'embarcation (1).

13. Embarcation de sauvetage selon l'une quelconque des revendications précédentes, **caractérisé en ce que** l'embarcation de sauvetage (1) comprend en outre un système de protection anti-incendie commandé par un utilisateur (22) connecté électriquement au banc de batteries (10).

14. Embarcation de sauvetage selon l'une quelconque des revendications précédentes, **caractérisé en ce que** l'embarcation de sauvetage (1) comprend en outre un système de support de gaz autonome commandé par un utilisateur fournissant du gaz respirable au sein de l'embarcation (1) pendant au moins 10 minutes tandis que toutes les ouvertures vers l'extérieur de l'embarcation (1) sont fermées par des vannes dédiées.

15. Procédé d'exploitation d'une embarcation de sauvetage (1) pour un bateau ou une autre installation en mer, l'embarcation de sauvetage (1) étant conforme à l'une quelconque des revendications 1 à 14, dans lequel le procédé comprend les étapes suivantes :

   - charge et surveillance périodique ou en continu du banc de batteries (10) à l'aide d'un chargeur de batterie extérieur (16) pour garantir une charge prédéterminée sur le banc de batteries (10), permettant au moins 10 minutes de sortie de puissance maximale au moteur électrique (8),
   - déconnexion du chargeur de batterie supplémentaire (16),
   - démarrage du moteur électrique (8) par une unité de commande connectée électriquement (17),
   - démarrage d'un système de gestion de batterie pour commander la source, le niveau et la durée du courant électrique fourni dans le moteur électrique (8) et
   - lancement de l'embarcation de sauvetage (1) depuis l'installation en mer à l'aide d'un système de lancement dédié.

Fig. 1

(a)

(b)

Fig. 2

Fig. 3

Fig. 4

Fig. 5

Fig. 6

(a)

(b)

(c)

Fig. 7

**EP 2 996 934 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 378127 A
- FR 2225965
- WO 2010133540 A1
- WO 2012104152 A2
- US 20110106348 A1
- WO 2012119873 A1